# EUROPÄISCHE PATENTANMELDUNG

(11) **EP 0 779 459 A2**
(43) Veröffentlichungstag der Anmeldung: **18.06.1997**
(21) Anmeldenummer: 96119018.8
(22) Anmeldetag: 27.11.1996
(51) Int. Cl.: F16K 31/06

(54) **Elektrisch ansteuerbares Magnetventil**

(30) Priorität: 12.12.1995 DE 19546385
(71) Anmelder: Bosch-Siemens Hausgeräte GmbH, 81669 München (DE)
(72) Erfinder: Kordon, Rolf, 89537 Giengen (DE); Strauss, Georg, Dipl.-Ing. (FH), 89537 Giengen (DE)

(57) **Zusammenfassung**

Bei einem elektrisch ansteuerbaren Magnetventil mit einem Ventilkörper zur Aufnahme eines darin weitestgehend geführt bewegbaren, stirnseitig Dichtflächen aufweisenden Ventilstellgliedes, welches von wenigstens einem Elektromagneten bewegt und welches zumindest in zwei Arbeitsstellungen bringbar ist, in welchen durch das Ventilstellglied jeweils ein Strömungsweg zwischen einer Einlaß- und einer Auslaßöffnung freigegeben ist, weist das Ventilstellglied im Bereich seiner Stirnseiten wenigstens je einen radial umlaufend angeordneten Vorsprung auf, welcher zur Führung des Ventilstellgliedes im durchströmten Querschnitt des Ventilkörpers dient und welcher zumindest an einer Stelle seines Umfangs eine Durchlaßöffnung für das zu steuernde Medium aufweist.

## Beschreibung

Die Erfindung betrifft ein elektrisch ansteuerbares Magnetventil mit einem Ventilkörper zur Aufnahme eines darin weitestgehend geführt bewegbaren, stirnseitig Dichtflächen aufweisenden Ventilstellgliedes, welches von wenigstens einem Elektromagneten bewegt und welches zumindest in zwei Arbeitsstellungen bringbar ist, in welchen durch das Ventilstellglied jeweils ein Strömungsweg zwischen einer Einlaß- und einer Auslaßöffnung freigegeben ist.

Aus der DE-PS 27 23 365 ist ein in ein Mehrtemperaturen-Kühlgerät einsetzbares 3/2-Wege-Magnetventil bekannt, dessen in der axialen Bohrung seines Ventilkörpers angeordnetes Ventilstellglied mehrteilig aufgebaut ist. Hiervon ist ein Teil als Stößel mit stirnseitig angeordneten Dichtkegeln und ein weiterer Teil als Anker für einen Elektromagneten dienender Hohlzylinder ausgebildet, in welchem an dessen inneren Rohrmantelfläche der Stößel entgegen einer Federkraft begrenzt beweglich geführt ist. Der Hohlzylinder ist wiederum innerhalb einer axial in den Ventilkörper eingebrachten Bohrung geführt, wobei die Mantelflache der Bohrung und die Mantelfläche des Hohlzylinders entlang seiner ganzen Länge mit Abstand zueinander angeordnet sind, um einen Strömungsweg für das zu steuernde Strömungsmediun freizusparren. Um dies sicherzustellen und dabei gleichzeitig eine ungenügende Führung des Ventilstellgliedes innerhalb der axialen Bohrung zu vermeiden, ist dafür Sorge zu tragen, daß der Außendurchmesser des Hohlzylinders und der Bohrungsdurchmesser relativ enge Toleranzen aufweisen. Dies wirkt sich ungünstig auf die Herstellkosten des Magnetventils aus.

Der Erfindung liegt die Aufgabe zugrunde, ein in einem Ventil gemäß dem Oberbegriff des Anspruches 1 einsetzbares Ventilstellglied vorzuschlagen, bei welchen mit einfachen konstruktiven Maßnahmen die Nachteile des Standes der Technik vermieden sind und dabei gleichzeitig eine hohe funktionale Qualität gewährleistet ist.

Diese Aufgabe wird gemäß der Erfindung dadurch gelöst, daß das Ventilstellglied im Bereich seiner beiden Stirnseiten wenigstens je einen radial umlaufend angeordneten Vorsprung aufweist, welcher zur Führung des Ventilstellgliedes an der inneren Mantelfläche des Ventilkörpers dient und welcher zumindest an einer Stelle seines Umfangs eine Durchlaßöffnung für das zu steuernde Strömungsmedium aufweist.

Durch die erfindungsgemäße Lösung ist eine sehr präzise Führung des Ventilstellgliedes anhand der Vorsprünge an der inneren Mantelfläche des Ventilkörpers erreicht, wobei die funktionsbedingt eng tolerierten Führungsabschnitte des Ventilstellgliedes auf die Vorsprünge beschränkt bleiben können, so daß die restliche Länge des Ventilstellgliedes dazu zurückversetzt mit deutlich gröberer Toleranz fertigbar ist, wodurch sich eine preiswerte Herstellung des Ventilstellgliedes ergibt. Zugleich ist durch die Einbringung einer Durchlaßöffnung in die Vorsprünge ein hinsichtlich seiner Abmessung definierter, von den Toleranzlagen des Ventilstellgliedes und des freien Durchlaßquerschnittes am Ventilkörper unabhängiger Strömungsweg für das zu steuernde Medium erzeugt.

Nach einer bevorzugten Ausführungsform des Gegenstandes der Erfindung ist vorgesehen, daß die die Durchlaßöffnung aufweisenden Vorsprünge an einem Grundkörper mitangeformt sind, welche zusammen mit den stirnseitig an ihm angeordneten Dichtflächen das Ventilstellglied bildet.

Durch einen derartigen Aufbau für ein Ventilstellglied ergibt sich für dieses aufgrund der zu seiner Fertigstellung notwendigen geringen Teilezahl eine vereinfachte Vormontage für das Ventilstellglied und gleichzeitig aber eine positionsgenaue Zuordnung der Vorsprünge zum Grundkörper.

Gemäß einer weiteren bevorzugten Ausführungsform des Gegenstandes der Erfindung ist vorgesehen, daß die die Durchlaßöffnung aufweisenden Vorsprünge an einem Grundkörper als stirnseitig den Grundkörper mit Dichtflächen ausstattende Dichtelemente ausgebildet und festgesetzt sind, die zusammen mit dem Grundkörper das Ventilstellglied bilden.

Ein derartig ausgebildetes Ventilstellglied ermöglicht den Einsatz unterschiedlicher Materialkombinationen für das Ventilstellglied, wobei in besonders günstiger Weise die zur Führung im Ventilkörper dienenden Vorsprünge reibungsgünstig anpaßbar sind. Auch ist es hierbei möglich, die an den Vorsprüngen vorgesehenen Durchlaßöffnungen auf einfache Weise an die Viskosität des zu steuernden Mediums anzupassen.

Besonders strömungsmediumoptimiert ausbildbar sind die Durchlaßöffnungen an den Vorsprüngen, wenn nach einer nächsten vorteilhaften Ausgestaltung des Gegenstandes der Erfindung vorgesehen ist, daß die Durchlaßöffnung durch eine Abweichung der Außenkontur der Vorsprünge von der Kontur der inneren Mantelfläche des Ventilkörpers erzeugt ist.

Entsprechend einer weiteren bevorzugten Ausführungsform des Gegenstandes der Erfindung ist vorgesehen, daß die die Durchlaßöffnung erzeugende Abweichung der Konturen zwischen den Vorsprüngen und der inneren Mantelfläche des Ventilkörpers durch voneinander abweichende Querschnittsformen gebildet ist.

Ein derartig aufgebautes Ventilstellglied ermöglicht zur Erzeugung der Strömungswege für das zu steuernde Medium den Einsatz kostengünstiger Halbzeuge oder halbzeugähnlicher Bauelemente zur Erzeugung der Vorsprünge.

Nach einer weiteren bevorzugten Ausführungsform des Gegenstandes der Erfindung ist vorgesehen, daß die innere Mantelfläche des Ventilkörpers kreisförmig ausgebildet ist.

Ein derartig ausgebildeter Ventilkörper ermöglicht den Einsatz von kostengünstig herstellbaren, zylindrischen Rohren, deren Kostenvorteil sich insbesondere bei in großen Stückzahlen produzierten Konsumgütern niederschlägt.

Auf besonders einfache weise sind die Führungsflächen für das Ventilstellglied an der inneren Mantelfläche des Ventilkörpers und dabei gleichzeitig definierte Durchlaßöffnungen für das zu steuernde Medium erzeugt, wenn nach einer nächsten bevorzugten Auführungsform des Gegenstandes der Erfindung vorgesehen ist, daß die Dichtelemente im wesentlichen als mit einer quadratischen Grundfläche ausgestattete gerade Prismen ausgebildet sind, deren Seitenflächen zur Bildung der Vorsprünge gegenüber der Mantelfläche des Grundkörpers vorspringen und deren Seitenkanten zur Führung des Ventilstellgliedes im Ventilkörper dienen.

Besonders preisgünstig und gleichzeitig besonders leicht anpassbar hinsichtlich der Werkstoffeigenschaften, wie Gleitfähigkeit, Strömungsmittelbeständigkeit und Abdichtfähigkeit sind die Dichtelemente an die gestellten Anforderungen, wenn nach einer weiteren bevorzugten Ausführungsform des Gegenstandes der Erfindung vorgesehen ist, daß die Dichtelemente aus Kunststoff-Spritzguß gebildet und reversibel verformbar sind.

Besonders sicher und positionsgenau gehalten und gleichzeitig leicht montierbar sind die Dichtelemente an den Stirnseiten des Grundkörpers, wenn nach einer nächsten bevorzugten Ausführungsform des Gegenstandes der Erfindung vorgesehen ist, daß die Dichtelemente an den Stirnseiten des Grundkörpers form- und/oder kraftschlüssig gehalten sind.

Entsprechend einer weiteren bevorzugten Ausführungsform des Gegenstandes der Erfindung ist vorgesehen, daß der Grundkörper als Rohrabschnitt mit kreiszylinderischem Querschnitt aus ferromagnetischem Material ausgeführt ist.

Ein derartig ausgebildeter Grundkörper eignet sich besonders zum Einsatz in Magnetventilen für das mit hohen Stückzahlen beaufschlagte Gebiet der Konsumgüterindustrie.

Genauso vorteilhaft auf dem Gebiet der Konsumgüterindustrie einsetzbar ist ein Grundkörper, wenn nach einer alternativen Ausgestaltung des Gegenstandes der Erfindung vorgesehen ist, daß der Grundkörperr als bolzenartiger Stößel aus ferromagnetischem Material gebildet ist.

In der Herstellung besonders einfach und damit kostengünstig ist ein Grundkörper, wenn nach einer weiteren bevorzugten Ausgestaltung des Gegenstandes der Erfindung vorgesehen ist, daß der Grundkörper im wesentlichen als halbzeugähnliches Bauelement ausgebildet ist.

Gemäß einer weitern bevorzugten Ausführungsform des Gegenstandes der Erfindung ist vorgesehen, daß der Ventilkörper wenigstens an seinen beiden Stirnseiten mit einer durch spanlose Formgebung erzeugten, trichterähnlich ausgebildeten Verjüngung versehen ist, deren trichterauslaufseitiges Ende einen auf den Außendurchmesser von anzuschließenden Rohrleitungen weitestgehend abgestimmten Öffnungsquerschnitt aufweist.

Durch die spanlose Formgebung der Stirnseiten ist kostengünstig in einem einzigen Fertigungsvorgang ein Anschlußstutzen für eine anzuschließende Rohrleitung erzeugt, welche am auslaufseitigen Ende ihrer trichterähnlichen Gestalt eine die Befestigung der anzuschließenden Rohrleitung deutlich erleichternde Führung aufweist. Zudem sind durch die spanlose Formgebung Zerspanungsrückstände vermieden, welche für den Fall, daß die Ventilkörper nicht einer eingehenden Reinigung unterzogen werden, zu Ventilstörungen führen könnten.

Außerdem ist die spanlose Formgebung in hohem Maße zur Herstellung hoher Stückzahlen geeignet, wie sie beispielsweise im Konsumgüterbereich durchwegs auftritt.

Entsprechend einer nächsten bevorzugten Ausführungsform des Gegenstandes der Erfindung ist vorgesehen, daß die trichterähnliche Verjüngung am Ventilkörper an einem separaten Rohrstutzen angeformt ist, welcher an den Stirnseiten des Ventilkörpers festgesetzt ist.

Durch eine derartige Ausbildung der Ventilkörper ist es möglich, diese in einem relativ späten Ferigungsstadium des Magnetventils produktspezifisch, entsprechend der anzuschließenden Rohrleitungen anzupassen.

Fertigungstechnisch besonders günstig herzustellen sind die separaten Rohrstutzen, wenn nach einer nächsten bevorzugten Ausführungsform des Gegenstandes der Erfindung vorgesehen ist, daß die mit den trichterähnlichen Verjüngungen versehenen separaten Rohrstutzen als Preßformteile aus Kupfer oder einer Kupferbasislegierung gebildet sind.

Entsprechend einer weiteren bevorzugten Ausführungsform des Gegenstandes der Erfindung ist vorgesehen, daß die trichterähnliche Verjüngung durch Herunterhämmern eines stirnseitigen Abschnitts der Rohrwandung eines als Ventilkörper dienenden dünnwandigen, plastisch verformbaren Rohres ähnlich einer Trocknerpatrone zum Einsatz in Kältegeräten erzeugt ist.

Hierdurch wird auf einfache Weise ein aus einem einzigen Werkstoff gebildetes, einstückiges Ventilgehäuse erzeugt, an welches zu seiner Fertigstellung lediglich noch einer weitere, als Zu- oder Ablauf dienende Öffnung anzubringen ist.

Besonders günstig anzuwenden ist die Erfindung auf ein Magnetventil, wenn nach einer weiteren vorteilhaften Ausführungsform des Gegenstandes der Erfindung vorgesehen ist, daß dieses als 3/2-Wege-Magnetventil mit stirnseitig in seinem länglich ausgebildeten Ventilkörper angeordneten Einlaß- bzw. Auslaßöffnung und mit einem in zwei Arbeitsstellungen bringbaren Ventilstellglied ausgebildet ist.
- Fig. 1: in einem ersten Ausführungsbeispiel, in räumlicher Darstellung, ein 3/2-Wege-Magnetvenetil mit an den Stirnseiten seines kreiszylindrischen Ventilgehäuses festgesetzten, verjüngt ausgebildeten, separaten Rohrstutzen und mit einem im Rohrraum des Ventilgehäuses beweglich geführten Ventilstellgliedes, an dessen Stirnseiten zur Führung dienende, im Querschnitt quadratisch ausgebildete Vorsprünge angeordnet sind, im Halbschnitt,
- Fig. 2: vergrößert das Ventilgehäuse gemäß Fig. 1 in Schnittdarstellung entlang der Schnittlinie II-II,
- Fig. 3: in einem zweiten Ausführungsbeispiel raumbildlich kreiszylindrisch ausgebildete Ventilgehäuse eines 3/2-Wege-Magnetventils mit an seinen Stirnseiten mit angeformten, trichterartigen Verjüngungen und mit den Verjüngungen zum Gehäuseinnenraum hin nachgeschaltet, an napfartigen Hohlkörpern angeordneten Ventilsitzen, im Halbschnitt und
- Fig. 4: vergrößert das Ventilgehäuse gemäß Fig. 3 in Schnittdarstellung entlang der Schnittlinie III-III.

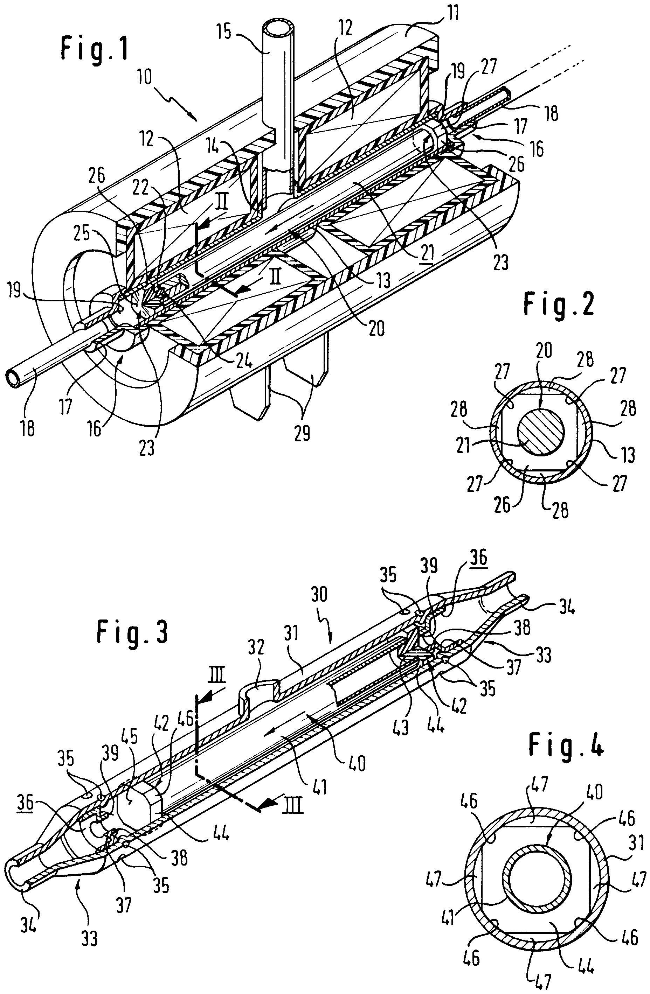

Fig. 1 ist in einem ersten Ausführungsbeispiel ein zur Steuerung des Kältemittelflusses in einer Mehrtemperaturen-Haushalts-Kältegerät geeignetes, elektrisch ansteuerbares Magnetventil gezeigt, welches als bistabiles 3/2-Wege-Magnetventil 10 ausgebildet ist. Dieses weist ein im wesentlichen als gerader Kreishohlzylinder ausgebildetes Gehäuse 11 aus thermoplastischem Kunststoff auf, welches zwei Ringspulen 12 berührungssicher umgibt. Die Ringspulen 12 sind mit ihrer inneren Ringmantelfläche auf einem als Ventilgehäuse dienenden Ventilkörper 13 im Abstand zueinander angeordnet. Dieser ist aus einem dünnwandigen, im Querschnitt kreisförmigen und plastisch verformbaren Rohr gebildet, welches aus einem nicht-ferromagnetischen Material, wie beispielsweise Kupfer besteht. Der als Rohr ausgebildete Ventilkörper 13 ist etwa in der Mitte seiner Länge mit einem von seiner äußeren Rohrwandung weggerichteten, durch spanlose Verformung der Rohrwandung erzeugten Durchzug ausgestattet, welcher als den Zulauf zum Magnetventil 10 bildender Anschlußstutzen 14 dient, an welchen eine über eine nicht näher bezeichnete Öffnung im Kunststoffgehäuse 11 von einem nicht gezeigten Verflüssiger im Kältekreislauf kommende Rohrleitung 15 herangeführt ist. Der Ventilkörper 13 ist ferner an seinen beiden Stirnseiten mit trichterartigen Verjüngungen 16 ausgestattet, welche im vorliegenden Ausführungsbeispiel als separate, am äußeren Rohrmantel der stirnseitigen Enden des Ventilkörpers 13 kraftschlüssig befestigter Rohrstutzen ausgebildet sind. Zur Befestigung der als Preßformteile ausgebildeten, aus Kupfer oder Messing gefertigten trichterartigen Rohrstutzen dient deren mit größerem Durchlaßquerschnitt ausgestatteter Abschnitt. Der mit geringerem Durchlaßquerschnitt ausgestattete, das trichterauslaufseitige Ende bildende Abschnitt des Rohrstutzens ist als Anschlußstutzen 17 zur Aufnahme einer Rohrleitung 18 ausgebildet, welche ihrerseits als zulaufseitig dem Verdampfer vorgeschaltetes Drosselrohr ausgeführt ist. Dem zum Einbringen des Drosselrohres dienenden Anschlußstutzen 17 ist ein Ventilsitz 19 vorgeschaltet, welche am Übergang des größeren Rohrquerschnitts zum geringeren Rohrquerschnitt des Rohrstutzens vorgesehen ist.

Die beiden an den stirnseitigen Enden des Ventilkörpers 13 festgesetzten Verjüngungen 16 begrenzen den Verstellweg eines im Rohrinnenraum des Ventilkörpers 13 beweglich geführten Ventilstellgliedes 20, welches einen ferromagnetischen Grundkörper 21 aufweist und zusammen mit den Ringspulen 12 Elektromagnete bildet. Dieser ist im vorliegenden Ausführungsbeispiel aus einem halbzeugartigen Rundmaterial gebildet, welches lediglich an seinen beiden Stirnseiten mit je einer Haltesacklochbohrung 22 versehen ist. Diese dient zur kraftschlüssigen Aufnahme eines an einem Ventilkegel 23 angeordneten Haltezapfen 24, mit dessen Hilfe jeder der beiden aus einem thermoplastischen Material gefertigten Ventilkegel 23 an den stirnseitigen Enden des Grundkörpers 21 festgesetzt sind. Die Ventilkegel 23 sind auf ihrer den Haltezapfen 24 gegenüberliegenden, den Verjüngungen 16 zugewandten Seite mit einer Dichtfläche 25 ausgestattet, welche mit den Ventilsitzen 19 an den Verjüngungen 16 strömungsmediumdicht bei entsprechender Stellung des Ventilstellgliedes 20 zusammenzuwirken vermögen. An die Dichtflächen 25 der Ventilkegel 23 schließt sich ein mit quadratischer Querschnittsfläche ausgestatteter quaderförmiger Abschnitt 26 an, dessen Außenkontur gegenüber der Mantelflache des Grundkörpers 21 vorspringt und dessen diagonales Eckenmaß auf den Innendurchmesser des Ventilkörpers 13 durch Abflachen der Längskanten des Abschnitts 26 abgestimmt ist. Durch das Abflachen sind Führungsflächen 27 am Abschnitt 26 erzeugt, welche zur Führung des Ventilstellgliedes 20 an der inneren Rohrmantelfläche des Ventilkörpers 13 in Richtung der Rohrachse dienen. Zwischen den Führungsflächen 27 entlang der Mantelfl**ä**chen des Abschnittes 26 sind durch dessen von Kontur der inneren Rohrmantelfläche des Ventilkörpers 13 abweichender Außenkontur Strömungswege 28 für das zu steuernde Strömungsmedium - bei Kältegeräten meist ein Gemisch aus gasförmigen und flüssigen Kältemittelanteilen - freigespart. Über diese Strömungswege 28 wird das Strömungsmedium von dem mittleren Anschlußstutzen 14 je nach Stellung des Ventilstellgliedes 20 einem der stirnseitigen Anschlußstutzens 17 am Ventilkörper 13 zugeführt.

Die Verstellung des Ventilstellgliedes 20 wird durch die Ringspulen 12 bewirkt, welche mittels gegenüber dem Kunststoffgehäuse 11 vorstehenden Steckanschlüssen 29 alternativ, je nach der gewünschten Arbeitsstellung des Ventilstellgliedes 20 bestromt werden. Durch die Bestromung der Ringspulen 12 üben diese auf das als Anker dienende Ventilstellglied 20 magnetische Kräfte aus, wodurch in Abhängigkeit der bestromten Ringspule 12 das Ventilstellglied 20 zum entsprechenden Ventilsitz 19 bewegt wird, so daß entweder der eine oder der andere stirnseitige Anschlußstutzen 17 mit dem mittleren Anschlußstutzen 14 strömungstechnisch verbunden ist.

In Fig. 2 ist eine zu der Konstruktion in Fig. 1 alternative Konstruktion für den Aufbau eines 3/2-Wege-Elektromagnetventils 30 gezeigt, wobei bei dieser Ausführungsform der Einfachheit halber die Elektromagnete und das zu deren berührungssicheren Abschirmen dienende Kunststoffgehäuse weggelassen wurde. Das Magnetventil 30 weist einen Ventilkörper 31 auf, welcher aus einem dünnwandigen, plastisch verformbaren, nicht ferromagnetischen Rohr (z.B. Kupfer), gebildet ist, in dessen Rohrwandung ein durch spanlose Formgebung erzeugter, von der äußeren Rohrmantelfläche weggerichteter, in etwa mittig zu den stirnseitigen Enden des Ventilkörpers 31 angeordneter Anschlußstutzen 32 eingeformt ist. Die stirnseitigen Enden des Ventilkörpers 31 sind durch Herunterhämmern ähnlich einer bei Kältegeräten zum Einsatz kommenden Trocknerpatrone spanlos zu trichterartigen Verjüngungen 33 geformt, deren vom Anschlußstutzen 32 weggerichtete trichterauslaufseitigen Endabschnitte als stirnseitige Anschlußstutzen 34 zur Aufnahme in einer nicht dargestellten, als Drosselrohr ausgebildeten Rohrleitung dienen. Im Nahbereich der trichterartigen Verjüngungen 33 ist der Ventilkörper 31 mit umlaufend von seiner äußeren Mantelfläche her in seine Rohrwandung spanlos eingeformten Prägungen 35 versehen, welche bezüglich der inneren Rohrmantelfläche nasenartig vorstehen. Die nasenartigen Prägungen 35 im Bereich der trichterartigen Verjüngungen 33 dienen als Tiefenanschläge für in den Öffnungsquerschnitt des Rohres von beiden Stirnseiten vor der Anformung der trichterartigen Verjüngungen 33 eingebrachten napfartigen Hohlkörpern 36, deren Bodenwandung 37 mit seiner vom Napfraum abgewandten Außenseite an den nasenartigen Vorsprüngen anschlägt. Hierdurch ist die Einpreßtiefe der napfartigen Hohlkörper 36 in den Rohrraum des Ventilkörpers 31 in Richtung seiner Rohrachse begrenzt. Die beiden Hohlkörper 36 weisen in ihrer Bodenwandung 37 einen spanlos darin eingebrachten Durchzug 38 auf, deren freie Enden in Richtung des mittleren Anschlußstutzens 32 gerichtet und als Ventilsitze 39 ausgebildet sind. Die in den Öffnungsquerschnitt des Ventilkörpers 31 an dessen innerer Rohrmantelfläche kraftschlüssig festgesetzten Hohlkörper 36 begrenzen den Verschiebeweg eines vor ihrem Einpressen in den Rohrraum eingefügten Ventilstellgliedes 40, welches im vorliegenden Ausführungsbeispiel einen als Halbzeug in Form eines ferromagnetischen Rohres mit kreisförmigem Querschnitt ausgebildeten Grundkörper 41 aufweist. Dieser ist an seinen beiden Stirnseiten mit je einem Ventilkegel 42 versehen, welcher im Spritzgießverfahren aus thermoplastischem Material gefertigt ist. Zur Befestigung der Ventilkegel 42 am Grundkörper 41 sind erstere mit einem Haltezapfen 43 ausgestattet, welche in den freien Öffnungsquerschnitt des rohrartigen Grundkörpers 41 kraftschlüssig eingesetzt sind. An die Haltezapfen 43 schließt sich ein mit quadartischem Querschnitt ausgestatteter quaderförmiger Abschnitt 44 an, welcher auf seiner vom Grundkörper 41 abgewandten, den trichterartigen Verjüngungen 33 zugewandten Stirnseite mit einer Dichtfläche 45 ausgestattet ist, welche in der entsprechenden Stellung des Ventilstellgliedes 40 mit dem jeweiligen Ventilsitz 39 am Hohlkörper 36 strömungsmediumsdicht zusammenwirkt. Die quaderförmigen Abschnitte 44 springen mit ihrer Außenkontur gegenüber der äußeren Mantelfläche des Grundkörpers 41 vor und weisen eine quadratische Querschnittsfläche auf, deren diagonales Eckenmaß auf den Innendurchmesser des Ventilkörpers abgestimmt ist. Die Abstimmung wird dabei durch ein an die Kontur der inneren Rohrmantelfläche angepaßtes Abflachen der einander diagonal gegenüberliegenden Längskanten des quaderförmigen Abschnitts 44 erzielt. Durch die Abflachungen sind Führungsflächen 46 gebildet, mit Hilfe derer das Ventilstellglied 40 im Rohrraumm des Ventilkörpers 41 in Richtung von dessen Rohrachse verschieblich geführt ist. Zwischen den Führungsflächen 46, entlang der Mantelflächen des quaderförmigen Abschnitts 44 sind durch dessen von der Kontur der inneren Rohrmantelfläche des Ventilkörpers 31 abweichender Außenkontur Strömungswege 47 erzeugt, über welche das beispielsweise über den mittleren Anschlußstutzen 32 zuströmende Strömungsmedium (z.B. flüssiges Kältemittel) entlang des Grundkörpers 41, je nach Stellung des Ventilstellgliedes 40 über den Ventilsitz 39, der an den Anschlußstutzen 34 angeschlossenen Drosselleitung zugeführt.

## Patentansprüche

1. Elektrisch ansteuerbares Magnetventil mit einem Ventilkörper zur Aufnahme eines darin weitestsgehend geführt bewegbaren, stirnseitig Dichtflächen aufweisenden, als Anker dienenden Ventilstellgliedes, welches von wenigstens einem Elektromagneten bewegt ist und welches zumindest in zwei Arbeitsstellungen bringbar ist, in welchen durch das Ventilstellglied jeweils ein Strömungweg zwischen einer Einlaß- und einer Auslaßöffnung freigegeben ist, **dadurch gekennzeichnet,** daß das Ventilstellglied (20, 40) im Bereich seiner beiden Stirnseiten wenigstens je einen radial umlaufend angeordneten Vorsprung (26, 44) aufweist, welche zusammen zur Führung des Ventilstellgliedes (20, 40) an der inneren Mantelfläche des Ventilkörpers (13, 31) dienen, welcher zumindest an einer Stelle ihres Umfangs eine Durchlaßöffnung (28, 47) für das zu steuernde Strömungsmedium aufweisen.

2. Elektrisch ansteuerbares Magnetventil nach Anspruch 1, **dadurch gekennzeichnet**, daß die die Durchlaßöffnungen (28, 47) aufweisenden Vorsprünge (26, 44) an einem Grundkörper (21, 41) mitangeformt sind, welcher zusammen mit den stirnseitig an ihm angeordneten Dichtflächen (25, 45) das Ventilstellglied (20, 40) bildet.

3. Elektrisch ansteuerbares Magnetventil nach Anspruch 1, **dadurch gekennzeichnet**, daß die die Durchlaßöffnungen (28, 47) aufweisenden Vorsprünge (26, 44) an einem Grundkörper (21, 41) als stirnseitig den Grundkörper (21, 41) mit Dichtflächen (25, 45) ausstattende Dichtelemente (23, 42) ausgebildet und festgesetzt sind, die zusammen mit dem Grundkörper (21, 41) das Ventilstellglied (20, 40) bilden.

4. Elektrisch ansteuerbares Magnetventil nach einem der Ansprüche 1 bis 3, **dadurch gekennzeichnet**, daß die Durchlaßöffnung (28, 47) durch eine Abweichung der Außenkontur der Vorsprünge (26, 44) von der Kontur der inneren Mantelfläche des Ventilkörpers (13, 31) erzeugt ist.

5. Elektrisch ansteuerbares Magnetventil nach einem der Ansprüche 1 bis 4, **dadurch gekennzeichnet**, daß die die Durchlaßöffnung (28, 47) erzeugende Abweichung der Konturen zwischen den Vorsprüngen (26, 44) und der inneren Mantelfläche des Ventilkörpers (13, 31) durch voneinander abweichede Querschnittsformen gebildet ist.

6. Elektrisch ansteuerbares Magnetventil nach einem der Ansprüche 1, 4 oder 5, **dadurch gekennzeichnet**, daß die innere Mantelflache des Ventilkörpers (13, 31) kreisförmig ausgebildet ist.

7. Elektrisch ansteuerbares Magnetventil nach Anspruch 3, **dadurch gekennzeichnet**, daß die Dichtelemente im wesentlichen mit einer quadratischen Grundfläche ausgestattete gerade Prismen (26, 44) ausgebildet sind, deren Seitenflachen zur Bildung der Vorsprünge (26, 44) gegenüber der Mantelfläche des Grundkörpers (21, 41) vorspringen und deren Seitenkanten zur Führung des Ventilstellgliedes (20, 40) im Ventilkörper (13, 31) dienen.

8. Elektrisch ansteuerbares Magnetventil nach Anspruch 3 oder 7, **dadurch gekennzeichnet**, daß die Dichtelemente (23, 42) aus Kunststoffspritzguß gebildet und reversibel verformbar sind.

9. Elektrisch ansteuerbares Magnetventil nach Anspruch 3, 7 oder 8, **dadurch gekennzeichnet**, daß die Dichtelemente (23, 42) an den Stirnseiten des Grundkörpers (21, 41) form- und/oder kraftschlüssig gehalten sind.

10. Elektrisch ansteuerbares Magnetventil nach Anspruch 2, 3, 7 oder 9, **dadurch gekennzeichnet**, daß der Grundkörper (21, 41) als Rohrabschnitt mit kreiszylinderischem Querschnitt aus ferromagnetischem Material ausgeführt ist.

11. Elektrisch ansteuerbares Magnetventil nach Anspruch 2, 3, 7 oder 9, **dadurch gekennzeichnet**, daß der Grundkörper (21, 41) als bolzenartiger Stößel aus ferromagnetischem Material gebildet ist.

12. Elektrisch ansteuerbares Magnetventil nach einem der Ansprüche 2, 3, 7 oder 9 bis 11, **dadurch gekennzeichnet**, daß der Grundkörper (21, 41) im wesentlichen als halbzeugähnliches Bauelement ausgebildet ist.

13. Elektrisch ansteuerbares Magnetventil nach einem der Ansprüche 1 oder 4 bis 7, **dadurch gekennzeichnet**, daß der Ventilkörper (13, 31) wenigstens an seinen beiden Stirnseiten mit einer durch spanlose Formgebung erzeugten, trichterähnlich ausgebildeten Verjüngung (16, 33) versehen ist, deren trichterauslaufseitiges Ende einen auf den Außendurchmesser von anzuschließenden Rohrleitungen (18) weitestgehend abgestimmten Öffnungsquerschnitt aufweist.

14. Elektrisch ansteuerbares Magnetventil nach Anspruch 13, **dadurch gekennzeichnet**, daß die trichterähnliche Verjüngung (16) am Ventilkörper (13) an einem separaten Rohrstutzen angeformt ist, welcher an einer der Stirnseiten des Ventilkörpers (13) festgesetzt ist.

15. Elektrisch ansteuerbares Magnetventil nach Anspruch 14, **dadurch gekennzeichnet**, daß der am Ventilkörper (13) festgesetzte, separate Rohrstutzen als Preßformteil aus Kupfer oder einer Kupferbasislegierung gebildet ist.

16. Elektrisch ansteuerbares Magnetventil nach Anspruch 13, **dadurch gekennzeichnet**, daß die trichterähnliche Verjüngung (33) durch Herunterhämmern eines stirnseitigen Abschnitts der Rohrwandung eines als Ventilkörper (31) dienenden, dünnwandigen Rohres ähnlich einer zum Einsatz in Kältegeräten geeigneten Trocknerpatrone erzeugt ist.

17. Elektrisch ansteuerbares Magnetventil, ausgebildet als 3/2-Wege-Magnetventil (10, 30) mit stirnseitig in seinem länglich ausgebildeten Ventilkörper (13, 31) angeordneten Einlaß- bzw. Auslaßöffnung und mit einem in zwei Arbeitsstellungen bringbaren Ventilstellglied (20, 40), **dadurch gekennzeichnet**, daß das Ventilstellglied nach einer der Ansprüche 1 bis 12 und der Ventilkörper (13, 31) an seinen beiden Stirnseiten nach einem der Ansprüche 13 bis 16 ausgebildet ist.
